(19) Europäisches Patentamt / European Patent Office / Office européen des brevets

(11) **EP 3 963 200 B1**

(12) **FASCICULE DE BREVET EUROPEEN**

(45) Date de publication et mention
de la délivrance du brevet:
**31.05.2023 Bulletin 2023/22**

(21) Numéro de dépôt: **20715883.3**

(22) Date de dépôt: **03.04.2020**

(51) Classification Internationale des Brevets (IPC):
*F02K 1/72* *(2006.01)*    *F02K 1/82* *(2006.01)*
*G10K 11/168* *(2006.01)*    *G10K 11/172* *(2006.01)*

(52) Classification Coopérative des Brevets (CPC):
**F02K 1/72; G10K 11/168; G10K 11/172;**
F05D 2260/96; Y02T 50/60

(86) Numéro de dépôt international:
**PCT/EP2020/059569**

(87) Numéro de publication internationale:
**WO 2020/224889 (12.11.2020 Gazette 2020/46)**

(54) **GRILLE D'INVERSEUR DE POUSSÉE INCLUANT UN TRAITEMENT ACOUSTIQUE**

SCHUBUMKEHRERKASKADE MIT SCHALLBEHANDLUNG

THRUST REVERSER CASCADE INCLUDING ACOUSTIC TREATMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.05.2019 FR 1904659**

(43) Date de publication de la demande:
**09.03.2022 Bulletin 2022/10**

(73) Titulaire: **SAFRAN AIRCRAFT ENGINES**
**75015 Paris (FR)**

(72) Inventeurs:
• **JODET, Norman, Bruno, André**
**77550 MOISSY-CRAMAYEL (FR)**
• **GONZALEZ, Jéremy, Paul, Francisco**
**77550 MOISSY-CRAMAYEL (FR)**

(74) Mandataire: **Cabinet Beau de Loménie**
**158, rue de l'Université**
**75340 Paris Cedex 07 (FR)**

(56) Documents cités:
**EP-A2- 1 978 232**    **FR-A1- 2 898 870**
**FR-A1- 2 912 833**    **FR-A1- 3 039 517**
**US-A- 5 927 647**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Domaine Technique

L'invention concerne le traitement acoustique des ondes sonores émises par une turbomachine d'un aéronef, et plus particulièrement le traitement des ondes sonores au niveau des inverseurs de poussée de la turbomachine.

Technique antérieure

Lorsqu'une turbomachine est en fonctionnement, l'interaction entre l'écoulement et les parties solides de la turbomachine sont responsables de la génération de bruits qui se propagent de part et d'autre de la turbomachine.

Un des moyens d'atténuer ce rayonnement acoustique est d'intégrer des moyens de traitement acoustique au niveau des surfaces en contacts avec les ondes sonores.

Classiquement, le traitement acoustique d'un turboréacteur, et plus précisément du bruit rayonné par l'interaction entre le rotor et son environnement, est fait à l'aide de panneaux absorbants disposés au niveau des surfaces mouillées du conduit dans lequel se propagent les ondes sonores. On entend par surfaces mouillées, les surfaces en contact avec un écoulement fluide. Ces panneaux sont généralement des matériaux composites de type sandwich emprisonnant un nid d'abeille formant des cellules d'absorption acoustique.

Il est connu par exemple dans l'état de la technique des panneaux acoustiques à un seul degré de liberté, ou SDOF pour « Single degree of freedom » en anglais, qui présentent une structure classique en nid d'abeilles de panneaux de traitement acoustique garnissant les parois de la nacelle d'une turbomachine.

De par le principe de fonctionnement des technologies de panneau de traitement acoustique utilisant des cavités résonnantes, l'encombrement radial, c'est-à-dire l'épaisseur radiale, des panneaux de traitement acoustique dépend de la fréquence de traitement ciblée pour obtenir un maximum d'efficacité en termes d'atténuation acoustique.

Cependant, les architectures moteurs présentent de plus en plus des vitesses de rotation des roues à aubes de plus en plus lentes et un nombre d'aubes sur les roues à aubes de plus en plus petit, ce qui entraîne une baisse des fréquences dominantes du bruit associé au module comprenant la soufflante et l'étage redresseur, ou module « fan-OGV » en anglais pour « Outlet Guide Vane ». De ce fait, l'adéquation entre l'épaisseur optimale des panneaux acoustiques et l'encombrement disponible dans les nacelles n'est, actuellement, pas satisfaite.

Pour ralentir un aéronef, une turbomachine comprend généralement des inverseurs de poussée. Il existe principalement deux technologies d'inverseurs de poussée qui sont basées sur l'action d'une grille. On distingue deux types d'inverseurs de poussée à grille : les inverseurs de poussée à grille fixe et les inverseurs de poussée à grille en liaison glissière.

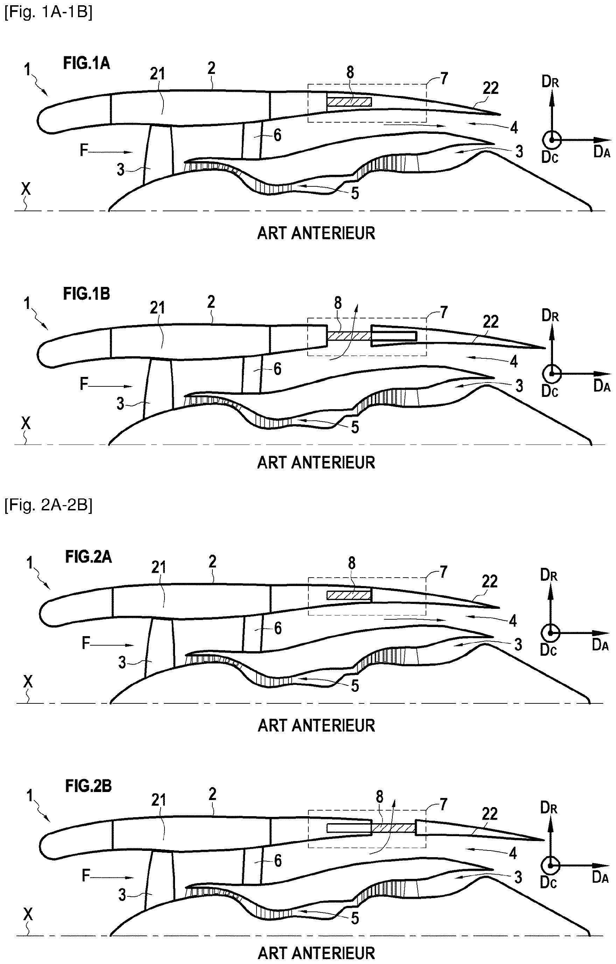

Sur les figures 1A et 1B sont présentées des vues schématiques en section dans un plan longitudinal d'une turbomachine 1 selon un premier mode de réalisation connu de l'état de la technique respectivement dans une position d'inversion de poussée inactivée et dans une position d'inversion de poussée activée.

La turbomachine 1 comprend une nacelle 2 à symétrie de révolution autour d'un axe X définissant une direction axiale DA, une direction radiale DR et une direction circonférentielle DC, une soufflante 3, une veine primaire 4, une veine secondaire, un étage redresseur primaire 5, un étage redresseur secondaire 6, et un dispositif 7 d'inversion de poussée à grille comportant une grille 8.

Comme cela est illustrée sur les figures 1A et 1B qui représentent une turbomachine dotée d'un inverseur de poussée à grille fixe, dans les inverseurs de poussée à grille fixe, la grille 8 est encastrée, c'est-à-dire solidaire, avec une partie amont 21 de la nacelle 2 et en liaison glissière avec une partie aval 22 de la nacelle 2, l'amont et l'aval étant définis par rapport au sens d'écoulement d'un flux gazeux F dans la turbomachine 1. En se translatant vers l'aval, la partie aval 22 de la nacelle 2 découvre la grille 8 qui devient la seule interface entre l'écoulement interne à la nacelle 2 et le milieu ambiant dans lequel évolue la turbomachine 1.

Sur les figures 2A et 2B sont présentées des vues schématiques en section dans un plan longitudinal d'une turbomachine 1 selon un second mode de réalisation connu de l'état de la technique respectivement dans une position d'inversion de poussée inactive et dans une position d'inversion de poussée activée.

Comme cela est illustrée sur les figures 2A et 2B qui représentent une turbomachine 1 dotée d'un inverseur de poussée à grille en liaison glissière, dans les inverseurs de poussée à grille fixe, la grille 8 est en liaison glissière par rapport à la partie amont 21 de la nacelle 2 et en liaison d'encastrement par rapport à la partie aval 22 de la nacelle 2. En se translatant vers l'aval, la partie aval 22 de la nacelle 2 entraine la grille 8 hors de la nacelle 2 pour la positionner à l'interface entre l'écoulement interne à la nacelle 2 et le milieu ambiant.

Un autre inverseur selon l'état de la technique est connu de FR 3 039 517 A1.

Les inverseurs de poussée représentent à la fois, un coût, une masse et un encombrement très pénalisants pour les performances de l'ensemble propulsif, alors qu'ils sont utilisés seulement à la fin de la phase d'atterrissage. Le volume qu'ils utilisent dans la nacelle ne peut notamment pas être utilisé, dans l'état de l'art, pour le traitement acoustique des ondes sonores émises par la turbomachine.

Dans les architectures d'ensemble propulsif utilisant des inverseurs de poussée à portes qui se déploient à l'intérieur du flux secondaire pour dévier l'écoulement vers l'amont à l'extérieur de la nacelle, une pratique connue d'intégration de traitement acoustique classique consiste à intégrer des panneaux acoustiques dans des cavités des portes d'inverseur. Cette pratique consiste simplement à intégrer des panneaux absorbants classiques dans les volumes disponibles, comme cela est fait dans le carter fan.

Exposé de l'invention

L'invention vise à fournir un dispositif d'inversion de poussée à grille qui permet à la fois de réorienter un flux d'air vers l'amont de la turbomachine à l'extérieur de la nacelle et de minimiser les pertes de charge à travers la grille lorsque l'inversion de poussée est activée, et de maximiser l'efficacité d'absorption acoustique lorsque l'inversion de poussée est inactive.

Un objet de l'invention propose un dispositif d'inversion de poussée à grille pour une turbomachine d'un aéronef selon les caractéristiques de la revendication 1.

Le dispositif comprend une grille d'inversion de poussée et un caisson. La grille s'étend dans un premier plan définissant une première direction et une seconde direction et comporte des premières cloisons disposées successivement selon la première direction et parallèles les unes aux autres, des secondes cloisons sécantes desdites premières cloisons et s'étendant chacune dans des plans parallèles les uns aux autres et parallèles à la première direction, et des cavités définies chacune par deux premières cloisons et deux secondes cloisons. Le caisson comprend une ouverture s'étendant dans un plan orthogonal à ladite première direction et un logement dans lequel la grille peut être insérée selon ladite première direction via ladite ouverture. Le caisson et ladite grille sont en translation relative l'un par rapport à l'autre dans la première direction entre une première position du dispositif dans laquelle la grille est entièrement disposée dans le logement et une seconde position du dispositif dans laquelle ladite grille est au moins en partie hors dudit logement.

Selon une caractéristique générale de l'invention, que le caisson comprend une paroi perforée destinée à être en contact avec un flux d'air et à être disposée entre ledit flux d'air et la grille lorsque le dispositif est dans la première position.

La paroi perforée comporte une pluralité d'orifices et une pluralité de bandes de paroi dépourvues d'orifices et destinées à être en regard des premières parois de la grille lorsque le dispositif est dans la première position, au moins un orifice étant disposé entre deux bandes de paroi successives dans la première direction et en regard d'une cavité lorsque le dispositif est dans la première position. La grille d'inversion de poussée peut être formée par une grille annulaire monobloc ou bien par une pluralité de sections de grille assemblables ensemble pour former un cylindre creux à base circulaire ou polygonale.

Lorsque le dispositif d'inversion de poussée à grille est monté sur un turboréacteur, la première direction correspond à une direction axiale du turboréacteur et la seconde direction correspond à une direction circonférentielle du turboréacteur lorsque la grille est au moins partiellement annulaire ou à une direction tangente à la direction circonférentielle du turboréacteur lorsque la grille est plane, autrement dit non courbée.

Les premières cloisons sont destinées à être orientées selon une direction sécante à la direction d'écoulement d'un flux gazeux à l'intérieur d'une turbomachine comportant un tel dispositif d'inversion de poussée à grille. Lorsque le dispositif d'inversion de poussée est monté sur une turbomachine, les premières cloisons, orientées selon une direction azimutale ou radiale de la turbomachine, sont indispensables pour garantir la fonctionnalité d'inversion de poussée. C'est en effet grâce à ces premières cloisons que le flux d'air circulant dans une veine, à l'intérieur de la nacelle dans laquelle le dispositif d'inversion de poussée est monté, peut être capté et réorienté vers l'amont de la turbomachine, par rapport au sens d'écoulement du flux à l'intérieur de la nacelle, à l'extérieur de la nacelle. Les secondes cloisons sont destinées à être orientées selon la direction du flux gazeux à l'intérieur d'une turbomachine comportant un tel dispositif d'inversion de poussée à grille. Lorsque le dispositif d'inversion de poussée est monté sur une turbomachine, orientées selon une direction axiale de la turbomachine, ne sont pas indispensables pour la fonctionnalité d'inversion de poussée. En revanche, elles permettent la formation de cavités résonnantes permettant d'atténuer des ondes acoustiques générées par la turbomachine.

Lorsque le dispositif d'inversion de poussée selon l'invention est monté sur une turbomachine et est dans la première position, le dispositif permet, d'une part, de faire communiquer les cavités formées par la grille d'inverseur avec le milieu fluide du flux secondaire de la turbomachine, et, d'autre part, d'assurer un contact de qualité entre la grille d'inverseur et le ou les matériaux localisés à l'interface avec le milieu fluide du flux secondaire.

Lorsque le dispositif d'inversion de poussée selon l'invention est monté sur une turbomachine et dans la première ou la seconde position, le dispositif permet de garantir son étanchéité aérodynamique.

Dans un premier aspect du dispositif d'inversion de poussée, le caisson peut comprendre en outre une interface poreuse formée d'au moins une couche de matériau poreux et disposée à l'interface entre la paroi perforée et la grille lorsque le dispositif d'inversion de poussée est dans la première position.

L'ajout d'une interface poreuse permet d'améliorer l'interface entre la grille d'inversion de poussée et la paroi perforée en assurant une meilleure étanchéité au niveau des jonctions entre les cloisons de la grille d'inversion de poussée et les bandes de paroi, tout en offrant un jeu intéressant pour améliorer le glissement de la grille d'inversion de poussée au moment de l'utilisation de la fonction d'inversion de poussée, c'est-à-dire lorsque le dispositif est dans la deuxième position.

Dans un deuxième aspect du dispositif d'inversion de poussée, l'interface poreuse peut posséder une épaisseur comprise entre 0,2 mm et 2 mm, l'épaisseur s'étendant dans une troisième direction perpendiculaire audit premier plan.

Dans un troisième aspect du dispositif d'inversion de poussée, une couche de matériaux poreux de l'interface poreuse peut comprendre une toile ou une mousse ou un matériau avec une structure cellulaire.

Dans un quatrième aspect du dispositif d'inversion de poussée, le dispositif peut comprendre en outre un cadre étanche disposé dans le logement entre la paroi perforée et la grille lorsque le dispositif est dans la première position, sur la périphérie de la paroi perforée dans le premier plan.

Le cadre d'étanchéité définit une surface de contact qui forme une portée. Cette portée permet de garantir l'étanchéité aérodynamique du dispositif et ainsi d'éviter toute fuite qui pénalise la performance de la turbomachine.

Dans un cinquième aspect du dispositif d'inversion de poussée, la distance séparant deux premières cloisons dans la première direction et la distance séparant deux secondes cloisons dans la deuxième direction peuvent être définies chacune en fonction des fréquences des ondes sonores à traiter par lesdites cavités.

La grille d'inversion de poussée peut ainsi être dimensionnée pour accorder les cavités sur les fréquences des ondes sonores rayonnées par la turbomachine dans lequel le dispositif d'inversion de poussée est monté, et notamment par rapport aux fréquences des ondes sonores rayonnées par le couple formé par la soufflante et l'étage d'aubes de redressement de la turbomachine.

Pour cela, est utilisée la relation suivante valable pour le dimensionnement d'un résonateur de Helmholtz classique.

[Math. 1]

$$F = \frac{C}{2\pi}\sqrt{\frac{S}{Vl'}}$$

Avec $F$ la fréquence d'accord en Hertz, $C$ la célérité du son en mètre par seconde, S la section du col en mètre carré, $V$ le volume de la cavité résonante en mètre, et $l'$ la longueur de col corrigée, le col étant formé par un orifice de la paroi perforée en regard d'une cavité. La longueur de col corrigée $l'$ étant calculée à partir de la somme de la longueur géométrique du col $l$ dans une direction perpendiculaire au plan dans lequel s'étend la paroi perforée avec la correction du canal $d$ où, pour des résonateurs juxtaposés :

[Math. 2]

$$d = 1{,}7r\left(1 - 0{,}7\sqrt{s}\right)$$

avec r le rayon d'un orifice, et s le taux de perforation.

Dans le cas d'un fonctionnement de type simple résonateur, le volume V correspond au volume des cavités formées par la structure de la grille d'inversion de poussée.

Dans un sixième aspect du dispositif d'inversion de poussée, les premières cloisons de la grille peut posséder une hauteur comprise entre 10 mm et 300 mm.

Dans un septième aspect du dispositif d'inversion de poussée, les premières cloisons peut comprendre une épaisseur comprise entre 0,5 mm et 5 mm pour être suffisamment épaisses pour tenir les cas de charges auxquels elles sont soumises, mais aussi les plus fines possible pour minimiser la masse et les pertes de charge dans la grille. L'épaisseur des premières cloisons est mesurée en un point donné de la seconde cloison, perpendiculairement à la tangente à la surface en ce point de la seconde cloison.

Dans un huitième aspect du dispositif d'inversion de poussée, le caisson comprend en outre une paroi acoustiquement réfléchissante mobile dans une troisième direction orthogonale audit premier plan et disposée parallèlement au premier plan entre une paroi externe et la grille lorsque le dispositif est dans la première position, la paroi externe étant destinée à être en contact avec une nacelle d'une turbomachine lorsque le dispositif est monté dans une turbomachine.

La paroi acoustiquement réfléchissante permet d'assurer le fonctionnement des cavités en cavité résonante.

Dans un neuvième aspect du dispositif d'inversion de poussée, la paroi acoustiquement réfléchissante peut posséder une épaisseur dans la troisième direction supérieure à 2 mm de sorte qu'elle dispose d'une inertie suffisante pour réfléchir les ondes acoustiques.

Dans un dixième aspect du dispositif d'inversion de poussée, le caisson peut comprendre des moyens élastiques montés entre la paroi externe et la paroi acoustiquement réfléchissante et configurés pour repousser ladite paroi acoustiquement réfléchissante vers la grille.

Le maintien en pression de la paroi acoustiquement réfléchissante contre la grille lorsque le dispositif est dans la première position permet d'assurer une bonne étanchéité acoustique des cavités résonantes formées par la grille, la paroi perforée et la paroi acoustiquement réfléchissante.

Dans un onzième aspect du dispositif d'inversion de poussée, la paroi acoustiquement réfléchissante possède des dimensions au moins égales aux dimensions de la grille dans ledit premier plan pour couvrir toutes les cavités de la grille et ainsi maximiser le traitement acoustique lorsque le dispositif est dans la première position.

Dans un douzième aspect du dispositif d'inversion de poussée, le caisson peut comprendre un actionneur configuré pour désolidariser la paroi acoustiquement réfléchissante de la grille lorsque le dispositif est dans la seconde position.

L'utilisation d'un actionneur pour désolidariser la paroi acoustiquement réfléchissante de la grille lors de l'actionnement du dispositif d'inversion de poussée pour qu'il passe de la première position à la seconde position ou inversement permet d'optimiser la compacité du dispositif d'inversion de poussée et donc de la turbomachine comprenant ledit dispositif.

L'actionneur peut comprendre au moins deux dispositifs complémentaires l'un de l'autre fonctionnant en translation ou en rotation, réparti azimutalement au niveau des extrémités axiales de la paroi acoustiquement réfléchissante. Lorsque le dispositif d'inversion de poussée est monté dans une turbomachine, l'actionneur peut être communalisé avec le système de translation de la nacelle.

Dans un treizième aspect du dispositif d'inversion de poussée, la paroi acoustiquement réfléchissante peut comprendre au moins une couche de matériau souple.

Le matériau souple peut être un polymère. La réalisation de la paroi acoustiquement réfléchissante en matériau souple permet d'assurer une bonne étanchéité au niveau de son interface avec la grille d'inversion de poussée.

Dans un quatorzième aspect du dispositif d'inversion de poussée, la paroi acoustiquement réfléchissante peut comprendre un empilement d'une pluralité de couches d'au moins deux différents matériaux.

L'utilisation d'un empilement de couche de matériaux éventuellement différents pour réaliser une paroi acoustiquement réfléchissante permet d'obtenir différentes combinaisons de propriétés intéressantes pour réaliser diverses fonctions relatives par exemple à la rigidité globale, ou à la souplesse de l'interface au niveau du contact avec la grille pour améliorer l'étanchéité.

Dans un quinzième aspect du dispositif d'inversion de poussée, la paroi acoustiquement réfléchissante peut être réalisée en une seule pièce.

L'avantage d'une paroi acoustiquement réfléchissante en une seule pièce réside dans la simplicité de mise en oeuvre car elle permet de ne pas avoir à gérer les alignements entre la paroi acoustiquement réfléchissante et la grille.

Dans un seizième aspect du dispositif d'inversion de poussée, la paroi acoustiquement réfléchissante peut être segmentée en au moins deux pièces est de ne pas avoir de limitation sur la rigidité du matériau qui constitue la paroi acoustiquement réfléchissante.

L'avantage d'une paroi acoustiquement réfléchissante segmentée en une pluralité de pièces

Dans un dix-septième aspect du dispositif d'inversion de poussée, la grille peut être mobile et le caisson fixe pour utiliser le dispositif d'inversion de poussée dans une turbomachine dotée d'un inverseur de poussée à grille en liaison glissière ou bien la grille peut être fixe et le caisson mobile pour utiliser le dispositif d'inversion de poussée dans une turbomachine dotée d'un inverseur de poussée à grille fixe. Dans un autre objet de l'invention, il est proposé une turbomachine destinée à être montée sur un aéronef, la turbomachine comprenant une nacelle à symétrie de révolution définissant une direction axiale et une direction radiale, la nacelle comportant un dispositif d'inversion de poussée à grille tel que défini ci-dessus.

Dans un autre objet de l'invention, il est proposé un aéronef comprenant au moins une turbomachine telle que définie ci-dessus.

Brève description des dessins

L'invention sera mieux comprise à la lecture faite ci-après, à titre indicatif mais non limitatif, en référence aux dessins annexés sur lesquels :

[Fig. 1A-1B] Les figures 1A et 1B, déjà décrites, présentent des vues schématiques en section dans un plan longitudinal d'une turbomachine selon un premier mode de réalisation connu de l'état de la technique respectivement dans une position d'inversion de poussée inactive et dans une position d'inversion de poussée activée.

[Fig. 2A-2B] Les figures 2A et 2B, déjà décrites, présentent des vues schématiques en section dans un plan longitudinal d'une turbomachine selon un second mode de réalisation connu de l'état de la technique respectivement dans une position d'inversion de poussée inactive et dans une position d'inversion de poussée activée.

[Fig. 3] La figure 3 représente une vue schématique en section selon un plan comprenant la direction axiale et la direction radiale d'un dispositif d'inversion de poussée à grille dans une position d'inversion de poussée inactive selon un premier mode de réalisation de l'invention.

[Fig. 4] La figure 4 représente une vue schématique en section selon un plan comprenant la direction axiale et la direction radiale d'un dispositif d'inversion de poussée à grille dans une position d'inversion de poussée activée selon un premier mode de réalisation de l'invention.

[Fig. 5] La figure 5 illustre schématiquement une vue en coupe selon un plan comprenant la direction axiale et la direction circonférentielle d'une grille du dispositif d'inversion des figures 3 et 4.

[Fig. 6] La figure 6 illustre schématiquement une vue de face dans la direction radiale d'une paroi perforée du dispositif d'inversion de poussée des figures 3 et 4.

[Fig. 7] La figure 7 représente une vue schématique en section selon un plan comprenant la direction axiale et la direction radiale d'un dispositif d'inversion de poussée dans une position d'inversion de poussée inactive selon un deuxième mode de réalisation de l'invention.

[Fig. 8] La figure 8 représente une vue schématique en section selon un plan comprenant la direction axiale et la direction radiale d'un dispositif d'inversion de poussée à grille dans une position d'inversion de poussée activée selon un deuxième mode de réalisation de l'invention.

[Fig. 9] La figure 9 représente une vue schématique en section selon un plan comprenant la direction axiale et la direction radiale d'un dispositif d'inversion de poussée à grille dans une position d'inversion de poussée inactive selon un troisième mode de réalisation de l'invention.

[Fig. 10] La figure 10 représente une vue schématique en section selon un plan comprenant la direction axiale et la direction radiale d'un dispositif d'inversion de poussée à grille dans une position d'inversion de poussée activée selon un troisième mode de réalisation de l'invention.

[Fig. 11] La figure 11 représente une vue schématique en section selon un plan comprenant la direction axiale et la direction radiale d'un dispositif d'inversion de poussée à grille dans une position d'inversion de poussée inactive selon un quatrième mode de réalisation de l'invention.

[Fig.12] La figure 12 représente une vue schématique en section selon un plan comprenant la direction axiale et la direction radiale d'un dispositif d'inversion de poussée à grille dans une position d'inversion de poussée activée selon un quatrième mode de réalisation de l'invention.

Description des modes de réalisation

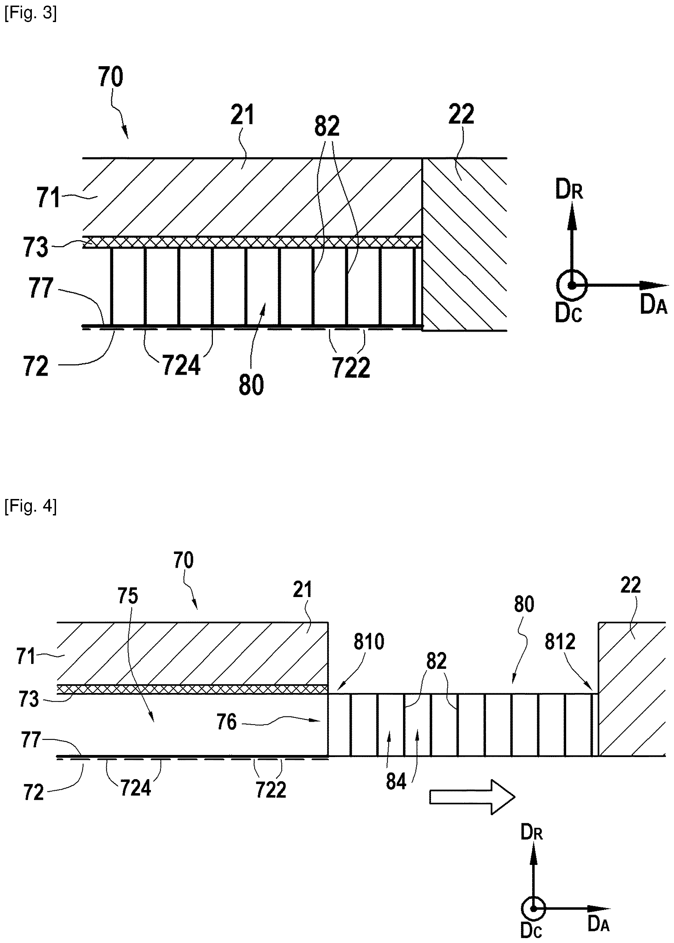

Sur les figures 3 et 4 sont représentées des vues schématiques en section selon un plan comprenant la direction axiale et la direction radiale d'un dispositif d'inversion de poussée à grille monté sur une turbomachine d'aéronef selon un premier mode de réalisation de l'invention et respectivement dans une position d'inversion de poussée inactive et dans une position d'inversion de poussée activé.

Sur les figures 3 et 4, la turbomachine 1 comprend un dispositif d'inversion de poussée 70 pouvant fonctionner selon le fonctionnement décrit sur les figures 2A et 2B. La turbomachine 1 comprend une nacelle 2 à symétrie de révolution autour d'un axe X définissant une direction axiale DA, une direction radiale DR et une direction circonférentielle DC.

Le dispositif d'inversion de poussée 70 comprend une pluralité de grilles 80 assemblées pour former une couronne grillagée. La couronne peut être à base cylindrique ou à base polygonale, les grilles 80 s'étendant respectivement soit dans un plan courbe comprenant la direction axiale DA et la direction circonférentielle DC de la turbomachine, soit dans un plan droit comprend la direction axiale DA et une direction tangente à la direction circonférentielle DC.

Dans les modes de réalisations illustrés les grilles 80 sont courbes pour faciliter l'explication et les repères, et s'étendent principalement dans un plan courbe, dénommé ci-après premier plan, comprenant la direction axiale DA et la direction circonférentielle DC.

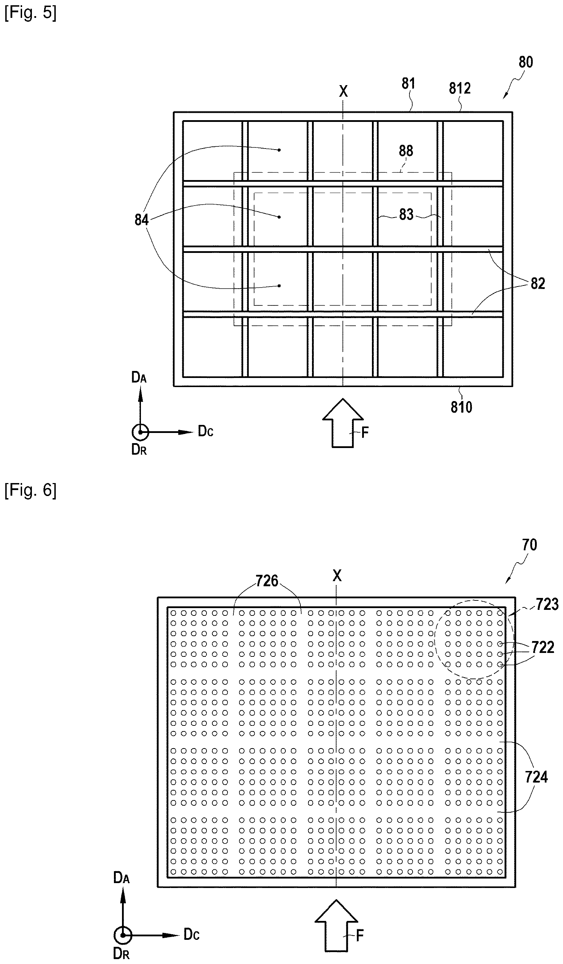

Comme cela est représenté sur la figure 5 qui est vue en coupe d'une grille 80 dans un plan de coupe parallèle au premier plan, chaque grille 80 comprend un cadre 81 à l'intérieur duquel s'étendent des premières cloisons 82 dans la direction circonférentielle DC et des premières cloisons transverses 83 dans la direction axiale DA. Le cadre 81, les premières cloisons 82 et les premières cloisons transverse 83 possèdent une hauteur dans la direction radiale DR comprise entre 10 mm et 300 mm.

L'épaisseur des premières cloisons 82 est comprise entre 0,5 mm et 5 mm pour être suffisamment épaisses pour tenir les cas de charges auxquels elles sont soumises, mais aussi les plus fines possible pour minimiser la masse et les pertes de charge dans la grille.

Les premières cloisons 82 sont des cloisons azimutales destinées à orienter le flux gazeux F vers l'extérieur de la nacelle 2 et en amont de la turbomachine 1 pour l'inversion de poussée lorsque le dispositif d'inversion de poussée est activée. Les premières cloisons transverses 83 sont des cloisons axiales destinées à définir, avec les premières cloisons 82, des premières cavités 84 pour l'absorption des ondes acoustiques générées par la turbomachine, lorsque le dispositif d'inversion de poussée est inactif.

La distance dans la direction circonférentielle DC séparant deux premières cloisons transverses 83 adjacentes l'une de l'autre est égale à la distance dans la direction axiale $D_A$ séparant deux premières cloisons 82, pour ainsi favoriser la propagation acoustique en ondes planes à l'intérieur des cavités.

La grille 80 comprend, selon la direction axiale DA de la turbomachine 1 sur laquelle le dispositif 70 est monté, une première extrémité axiale 810 et une seconde extrémité axiale 812. Comme cela est illustré sur les figures 3 et 4, la seconde extrémité axiale 812 des grilles 80 est fixée sur une portion aval 22 de la nacelle 2 mobile par rapport à une portion amont 21 de la nacelle 2.

Logé dans la partie amont 21 de la nacelle 2 de la turbomachine 1, le dispositif d'inversion de poussée 70 comprend une pluralité de caissons 71 assemblées pour former une couronne de panneaux. La couronne peut être à base cylindrique ou à base polygonale, les caissons 71 s'étendant respectivement soit dans un plan courbe comprenant la direction axiale DA et la direction circonférentielle DC de la turbomachine 1, soit dans un plan droit comprend la direction axiale DA et une direction tangente à la direction circonférentielle DC.

Dans les modes de réalisations illustrés les caissons 71 sont courbes pour faciliter l'explication et les repères, et s'étendent principalement dans un plan courbe comprenant la direction axiale DA et la direction circonférentielle DC.

Chaque caisson 71 comporte successivement dans la direction radiale DR en s'éloignant de l'axe de révolution, une paroi perforée 72, une interface poreuse 77, un logement 75 configuré pour accueillir la grille 80, et une paroi acoustiquement réfléchissante 73. L'interface poreuse 77 est collée à la paroi perforée 72 à l'intérieur du caisson 71 et le logement 75 s'étendant, dans la direction radiale DR, entre l'interface poreuse 77 et la paroi acoustiquement réfléchissante 73.

Le caisson 71 comprend en outre une ouverture 76 communiquant avec le logement 75, l'ouverture s'étendant dans un plan comprenant la direction radiale DR et la direction circonférentielle DC à une extrémité axiale du caisson 71 en regard de la partie aval 22 de la nacelle 2.

Lorsque l'inversion de poussée est inactive, le dispositif d'inversion de poussée 70 est dans une première position illustrée sur la figure 3 dans laquelle la grille 80 est disposée dans le logement 75 du caisson 71.

Lorsque l'inversion de poussée est activée, le dispositif d'inversion de poussée 70 est dans une seconde position illustrée sur la figure 4 dans laquelle la grille 80 est sortie du caisson 71 dans la direction axiale DA en translation avec la partie aval 22 de la nacelle, laissant le logement 75 libre au moins en partie.

Comme cela est représenté sur la figure 6 qui est vue de face dans la direction radiale DR de la paroi perforée 72 du dispositif d'inversion de poussée 70 des figures 3 et 4, la paroi perforée comprend une pluralité d'orifices 722 et des premières bandes de paroi 724 dépourvues d'orifices et des secondes bandes de paroi 726 dépourvues d'orifices et orthogonales aux premières bandes de paroi 724. Lorsque le dispositif 70 est monté sur une turbomachine 1, les premières bandes de paroi 724 s'étendent dans la direction circonférentielle DC et les secondes bandes de paroi 726 s'étendent dans la direction axiale DA.

Les bandes de paroi 724 et 726 séparent ainsi des groupes matriciels d'orifices 723, chaque groupe 728 étant en communication fluidique avec une seule cavité 84 de la grille 80.

La paroi perforée 72 est configurée pour que les premières bandes de paroi 724 soient alignées avec les premières cloisons 82 et les secondes bandes de paroi 726 soient alignées avec les secondes cloisons 83 lorsque le dispositif 70 est dans la première position pour ainsi optimiser l'étanchéité des cavités 84.

En outre, l'interface poreuse 77 est formée de plusieurs couches de matériau poreux et présente une épaisseur E dans la direction radiale DR comprise entre 0,2 mm et 2 mm pour améliorer l'interface entre la grille 80 mobile et la paroi perforée 72 en assurant une meilleure étanchéité tout en facilitant le glissement de la grille 80 dans le logement 75 lors des translations.

Lorsque le dispositif d'inversion de poussée 70 est dans sa première position telle qu'illustrée sur la figure 3, les premières cavités 84 forment ainsi des cavités résonantes, ou cellules de traitement acoustique, grâce à la paroi acoustiquement réfléchissante 73 et aux premières et secondes cloisons 82 et 83.

En outre, comme cela est représenté sur la figure 5, le caisson 71 peut comprendre une portée d'étanchéité 88 ayant une forme rectangulaire dans un plan comprenant la direction axiale DA et la direction circonférentielle DC. La portée d'étanchéité 88 est montée sur l'interface poreuse 77 entre la grille 80 d'inversion de poussée et l'interface poreuse 77. La portée d'étanchéité 88 est formée sur l'interface poreuse 77 de manière à s'étendre le long de premières et de secondes cloisons 82 et 83 de la grille 80 lorsque le dispositif 70 est dans la première position pour former une liaison étanche avec l'interface poreuse 77.

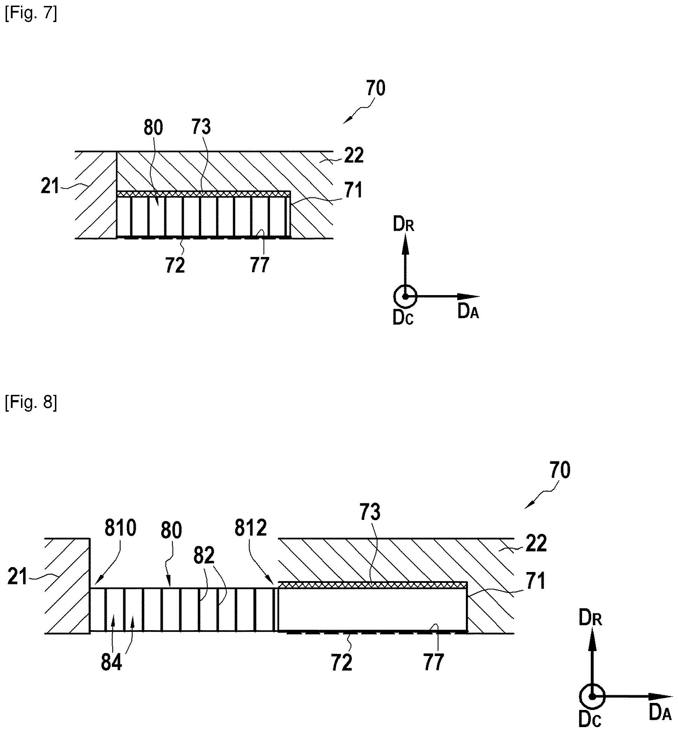

Sur les figures 7 et 8 sont représentées des vues schématiques en section selon un plan comprenant la direction axiale et la direction radiale d'un dispositif d'inversion de poussée à grille 70 monté sur une turbomachine d'aéronef selon un deuxième mode de réalisation de l'invention et respectivement dans une position d'inversion de poussée inactive et dans une position d'inversion de poussée activé.

Sur les figures 7 et 8, la turbomachine 1 comprend cette fois-ci un dispositif d'inversion de poussée 70 pouvant fonctionner selon le fonctionnement décrit sur les figures 1A et 1B.

Le deuxième mode de réalisation diffère du premier mode de réalisation en ce que la grille 80 est solidaire de la partie amont 21 de la nacelle 2 de la turbomachine 1 et le caisson 71 est réalisé dans la partie aval 22 de la nacelle 2.

Le caisson 71 comprend une ouverture 76 communiquant avec le logement 75, l'ouverture s'étendant dans un plan comprenant la direction radiale DR et la direction circonférentielle DC à une extrémité axiale du caisson 71 en regard de la partie amont 21 de la nacelle 2.

Lorsque l'inversion de poussée est inactive, le dispositif d'inversion de poussée 70 est dans une première position illustrée sur la figure 7 dans laquelle la grille 80 est disposée dans le logement 75 du caisson 71.

Lorsque l'inversion de poussée est activée, le dispositif d'inversion de poussée 70 est dans une seconde position illustrée sur la figure 8 dans laquelle la grille 80 est sortie du caisson 71 dans la direction axiale DA, le caisson 71 étant en translation avec la partie aval 21 de la nacelle 2, laissant le logement 75 libre au moins en partie.

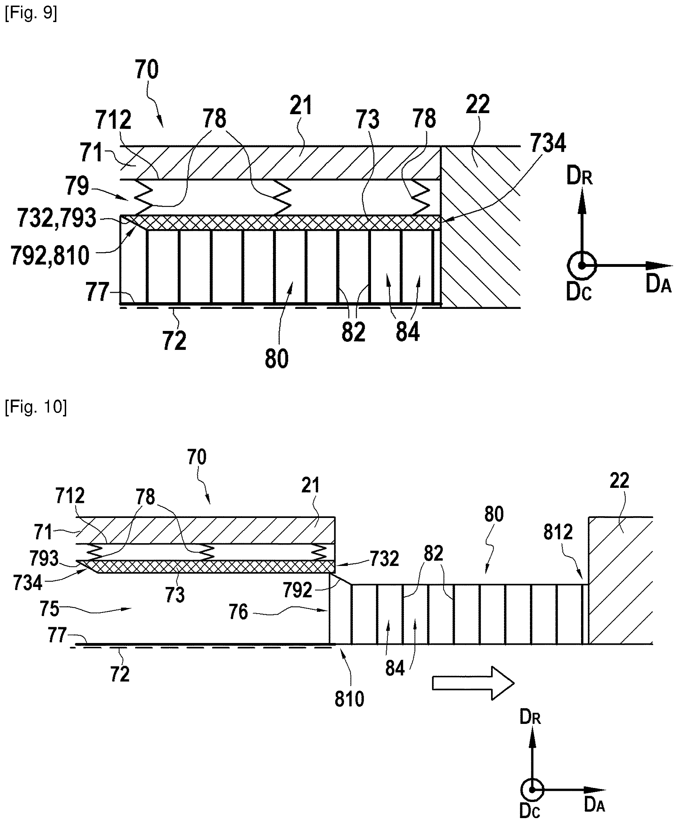

Sur les figures 9 et 10 sont représentées des vues schématiques en section selon un plan comprenant la direction axiale DA et la direction radiale DR d'un dispositif d'inversion de poussée à grille monté sur une turbomachine 1 d'aéronef selon un troisième mode de réalisation de l'invention et respectivement dans une position d'inversion de poussée inactive et dans une position d'inversion de poussée activé.

Comme pour le premier mode de réalisation, dans le troisième mode de réalisation illustré sur les figures 9 et 10, la turbomachine 1 comprend un dispositif d'inversion de poussée 70 pouvant fonctionner selon le fonctionnement décrit sur les figures 2A et 2B. La turbomachine 1 comprend une nacelle 2 à symétrie de révolution autour d'un axe X définissant une direction axiale DA, une direction radiale DR et une direction circonférentielle DC.

Le troisième mode de réalisation diffère du premier mode de réalisation en ce que le caisson 71 comprend en outre une paroi externe 712, des ressorts de compression 78 coopérant avec la paroi acoustiquement réfléchissante 73 et un actionneur 79 configuré pour désolidariser la paroi acoustiquement réfléchissante 73 de la grille 80 lorsque le dispositif 70 est sorti de sa première position.

La paroi externe 712 du caisson 71 est disposé à une extrémité radialement externe du caisson 71. Les ressorts de compression 78 sont montés entre la paroi externe 712 et la paroi acoustiquement réfléchissante 73 et exercent une force radialement interne pour plaquer la paroi acoustiquement réfléchissante 73 contre la grille 80 lorsque le dispositif 70 est dans la première position et ainsi assurer une meilleure étanchéité et optimiser le traitement acoustique. Les termes "interne" et "externe" sont utilisés ici en référence à la direction radiale DR.

L'actionneur 79 comprend une première surface biseautée 792 sur la première extrémité 810 axiale de la grille 80 s'étendant en saillie radiale depuis la extrémité axiale 810 du cadre 81 de la grille 80 de manière à s'étendre radialement vers l'extérieur au-delà des premières et secondes cloisons 82 et 83 de la grille 80.

La paroi acoustiquement réfléchissante 73 comprend une première extrémité axiale 732 et une seconde extrémité axiale 734 opposée à la première extrémité axiale 732. La première extrémité axiale 732 est en regard de la partie amont 21 de la nacelle 2 tandis que la seconde extrémité axiale 734 est en regard de la partie avale 22 de la nacelle 2. Autrement dit, la première extrémité axiale 732 correspond à une extrémité amont tandis que la secondes extrémité axiale 734 correspond à une extrémité aval de la paroi acoustiquement réfléchissante 73.

L'actionneur 79 comprend une seconde surface biseautée 793 sur la première extrémité axiale 732 de la paroi acoustiquement réfléchissante 73. La seconde surface biseauté 793 coopère avec la première surface biseauté 792 lorsque le dispositif 70 est dans la première position pour permettre à la paroi acoustiquement réfléchissante 73 d'être en appui dans la direction radiale DR contre la grille 80. La première surface biseauté 792 et la seconde surface biseauté 793 sont parallèles l'une à l'autre et forment chacune un angle de 45° avec le premier plan, c'est-à-dire avec un plan comprenant la direction axiale DA et la direction circonférentielle DC. La seconde surface biseauté 793 coopère également avec la première surface biseauté 793 pour permettre à la grille 80 d'être retirée du logement 75 lorsque le dispositif 70 est sorti de la première position. L'actionneur 79 entraîne une compression des ressorts 78 et un déplacement de la paroi acoustiquement réfléchissante 73 vers l'extérieur dans la direction radiale DR jusqu'à ce que toute la grille 80, et plus particulièrement la première surface biseautée 792 puisse passer sous la paroi acoustiquement réfléchissante 73, et ainsi permettre l'extraction de la grille 80 hors du logement 75.

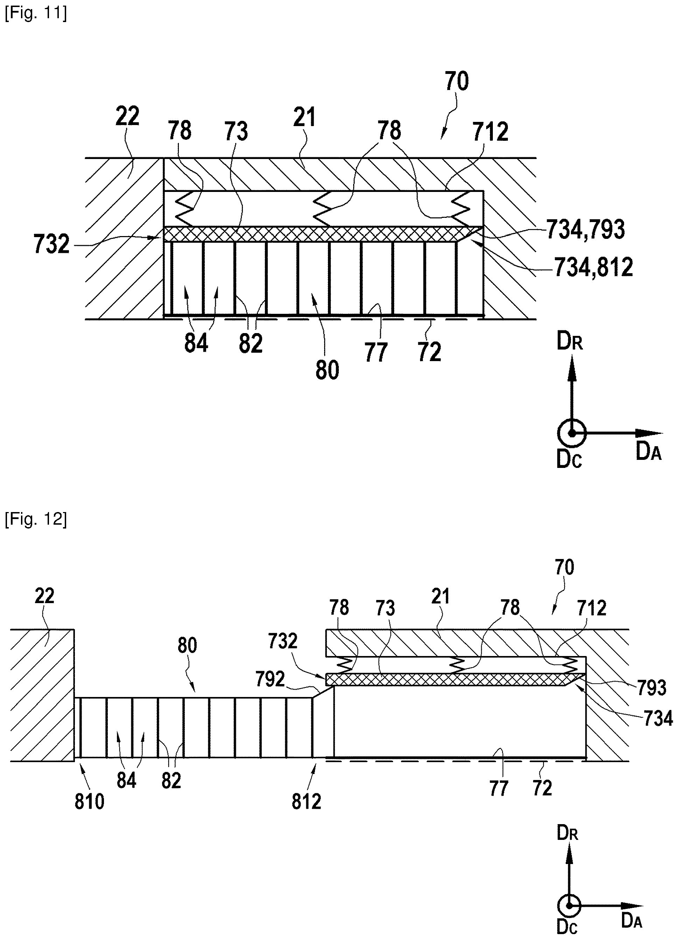

Sur les figures 11 et 12 sont représentées des vues schématiques en section selon un plan comprenant la direction axiale DA et la direction radiale DR d'un dispositif d'inversion de poussée à grille monté sur une turbomachine 1 d'aéronef selon un quatrième mode de réalisation de l'invention et respectivement dans une position d'inversion de poussée inactive et dans une position d'inversion de poussée activé. Le quatrième mode de réalisation diffère du troisième mode de réalisation illustré sur les figures 9 et 10 en ce que la grille 80 est solidaire de la partie amont 21 de la nacelle 2 de la turbomachine 1 et le caisson 71 est réalisé dans la partie aval 22 de la nacelle 2.

Dans le quatrième mode de réalisation, l'actionneur 79 se trouve aux extrémités avals. La première surface biseauté 792 est à la seconde extrémité axiale 812 du cadre 81 de la grille 80 et la seconde surface biseauté 793 de l'actionneur 79 est disposé à la seconde extrémité axiale 734.

L'invention fournit ainsi un dispositif d'inversion de poussée à grille qui permet à la fois de réorienter un flux d'air vers l'amont de la turbomachine à l'extérieur de la nacelle et de minimiser les pertes de charge à travers la grille lorsque l'inversion de poussée est activée, et de maximiser l'efficacité d'absorption acoustique lorsque l'inversion de poussée est inactive.

## Revendications

1. Dispositif (70) d'inversion de poussée à grille pour une turbomachine (1) d'un aéronef, le dispositif (70) comprenant une grille (80) d'inversion de poussée et un caisson (71), la grille (80) s'étendant dans un premier plan définissant une première direction ($D_A$) et une seconde direction ($D_C$) et comportant des premières cloisons (82) disposées successivement selon la première direction ($D_A$) et parallèles les unes aux autres, des secondes cloisons (83) sécantes desdites premières cloisons (82) et s'étendant chacune dans des plans parallèles les uns aux autres et parallèles à la première direction ($D_A$), et des cavités (84) définies chacune par deux premières cloisons (82) et deux secondes cloisons (83), le caisson (71) comprenant une ouverture (76) s'étendant dans un plan orthogonal à ladite première direction ($D_A$) et un logement (75) dans lequel la grille (80) peut être insérée selon ladite première direction ($D_A$) via ladite ouverture (76), et le caisson (71) et ladite grille (80) étant en translation relative l'un par rapport à l'autre dans la première direction ($D_A$) entre une première position du dispositif (70) dans laquelle la grille (80) est entièrement disposée dans le logement (75) et une seconde position du dispositif (70) dans laquelle ladite grille (80) est au moins en partie hors dudit logement (75), **caractérisé en ce que** le caisson (71) comprend une paroi perforée (72) destinée à être en contact avec un flux d'air (F) et à être disposée entre ledit flux d'air (F) et la grille (80) lorsque le dispositif (70) est dans la première position, la paroi perforée (72) comportant une pluralité d'orifices (722) et une pluralité de bandes de paroi (724) dépourvues d'orifices et destinées à être en regard des premières parois (82) de la grille (80) lorsque le dispositif (70) est dans la première position, au moins un orifice (722) étant disposé entre deux bandes de paroi (724) successives dans la première direction (DA) et en regard d'une cavité (84) lorsque le dispositif (70) est dans la première position.

2. Dispositif (70) d'inversion de poussée à grille selon la revendication 1, dans lequel le caisson (71) comprend en outre une interface poreuse (77) formée d'au moins une couche de matériau poreux et disposée à l'interface entre la paroi perforée (72) et la grille (80) lorsque le dispositif d'inversion de poussée (70) est dans la première position.

3. Dispositif (70) d'inversion de poussée à grille selon la revendication 2, dans lequel l'interface poreuse (77) possède une épaisseur (E) comprise entre 0,2 mm et 2 mm, l'épaisseur (E) s'étendant dans une troisième direction (DR) perpendiculaire audit premier plan.

4. Dispositif (70) d'inversion de poussée à grille selon l'une des revendications 2 ou 3, dans lequel une couche de matériaux poreux de l'interface poreuse (77) comprend une toile ou une mousse ou un matériaux avec une structure cellulaire.

5. Dispositif (70) d'inversion de poussée à grille selon l'une des revendications 1 à 4, comprenant en outre un cadre (88) étanche disposé dans le logement (75) entre la paroi perforée (72) et la grille (80) lorsque le dispositif (70) est dans la première position, sur la périphérie de la paroi perforée (72) dans le premier plan.

6. Dispositif (70) d'inversion de poussée à grille selon l'une des revendications 1 à 5, dans lequel la distance séparant deux premières cloisons (82) dans la première direction (DA) et la distance séparant deux secondes cloisons (83) dans la deuxième direction (DC) étant définies chacune en fonction des fréquences des ondes sonores à traiter par lesdites cavités (84).

7. Dispositif (70) d'inversion de poussée à grille selon l'une des revendications 1 à 6, dans lequel les premières cloisons (82) de la grille possèdent une hauteur (H) comprise entre 10 mm et 300 mm.

8. Dispositif (70) d'inversion de poussée à grille selon l'une des revendications 1 à 7, dans lequel les premières cloisons (82) possèdent une épaisseur (E) comprise entre 0,5 mm et 5 mm.

9. Dispositif (70) d'inversion de poussée à grille selon l'une des revendications 1 à 8, dans lequel le caisson (71) comprend en outre une paroi acoustiquement réfléchissante (73) mobile dans une troisième direction (DR) orthogonale audit premier plan et disposée parallèlement au premier plan entre une paroi externe (712) et la grille (80) lorsque le dispositif (70) est dans la première position, la paroi externe (712) étant destinée à être en contact avec une nacelle (2) d'une turbomachine (1) lorsque le dispositif (70) est monté dans une turbomachine (1).

10. Dispositif (70) d'inversion de poussée à grille selon la revendication 9, dans lequel la paroi acoustiquement réfléchissante (73) possède une épaisseur dans la troisième direction (DR) supérieure à 2 mm.

11. Dispositif (70) d'inversion de poussée à grille selon l'une des revendications 9 ou 10, dans lequel le caisson (71) comprend des moyens élastiques (78) montés entre la paroi externe (712) et la paroi acoustiquement réfléchissante (73) et configurés pour repousser ladite paroi acoustiquement réfléchissante (73) vers la grille (80).

12. Dispositif (70) d'inversion de poussée à grille selon l'une des revendications 9 à 11, dans lequel la paroi acoustiquement réfléchissante (73) possède des dimensions au moins égales aux dimensions de la grille (80) dans ledit premier plan.

13. Dispositif (70) d'inversion de poussée à grille selon l'une des revendications 9 à 12, comprenant en outre un actionneur (79) configuré pour désolidariser la paroi acoustiquement réfléchissante (73) de la grille (80) lorsque le dispositif (70) est dans la seconde position.

14. Dispositif (70) d'inversion de poussée à grille selon l'une des revendications 9 à 13, dans lequel la paroi acoustiquement réfléchissante (73) comprend au moins une couche de matériau souple.

15. Dispositif (70) d'inversion de poussée à grille selon l'une des revendications 10 ou 15, dans lequel la paroi acoustiquement réfléchissante (73) comprend un empilement d'une pluralité de couches d'au moins deux différents matériaux.

16. Dispositif (70) d'inversion de poussée à grille selon l'une des revendications 9 à 15, dans lequel la paroi acoustiquement réfléchissante (73) est réalisée en une seule pièce.

17. Dispositif (70) d'inversion de poussée à grille selon l'une des revendications 9 à 15, dans lequel la paroi acoustiquement réfléchissante (73) est segmentée en au moins deux pièces.

18. Dispositif (70) selon l'une des revendications 1 à 17, dans lequel la grille (80) est mobile et le caisson (71) est fixe.

19. Dispositif (70) selon l'une des revendications 1 à 17, dans lequel la grille (80) est fixe et le caisson (71) est mobile.

20. Turbomachine (1) destinée à être montée sur un aéronef, la turbomachine (1) comprenant une nacelle (2) à symétrie de révolution définissant une direction axiale (DA) et une direction radiale (DR), la nacelle (2) comportant un dispositif (70) d'inversion de poussée à grille selon l'une des revendications 1 à 19.

21. Aéronef comprenant au moins une turbomachine (1) selon la revendication 20.

**Patentansprüche**

1. Schubumkehrvorrichtung (70) mit Gitter für ein Turbinentriebwerk (1) eines Luftfahrzeugs, wobei die Vorrichtung (70) ein Schubumkehrgitter (80) und einen Kasten (71) umfasst, wobei das Gitter (80) sich in einer ersten Ebene erstreckt, die eine erste Richtung (D$_A$) und eine zweite Richtung (D$_C$) definiert, und erste Trennwände (82), die aufeinanderfolgend entlang der ersten Richtung (D$_A$) angeordnet und parallel zueinander sind, zweite Trennwände (83), welche die ersten Trennwände (82) schneiden und sich jeweils in zueinander parallelen Ebenen und parallel zur ersten Richtung (D$_A$) erstrecken, und Hohlräume (84) umfasst, die jeweils durch zwei erste Trennwände (82) und zwei zweite Trennwände (83) definiert sind, wobei der Kasten (71) eine Öffnung (76), die sich in einer Ebene orthogonal zur ersten Richtung (D$_A$) erstreckt, und eine Aufnahme (75) umfasst, in der das Gitter (80) entlang der ersten Richtung (D$_A$) über die Öffnung (76) eingesetzt werden kann, und der Kasten (71) und das Gitter (80) sich in Bezug aufeinander in der ersten Richtung (D$_A$) zwischen einer ersten Position der Vorrichtung (70), in der das Gitter (80) vollständig in der Aufnahme (75) angeordnet ist, und einer zweiten Position der Vorrichtung (70) in Translation befinden, in der das Gitter (80) sich zumindest teilweise außerhalb der Aufnahme (75) befindet, **dadurch gekennzeichnet, dass** der Kasten (71) eine perforierte Wand (72) umfasst, die dazu bestimmt ist, mit einer Luftströmung (F) in Kontakt zu sein und zwischen der Luftströmung (F) und dem Gitter (80) angeordnet zu sein, wenn die Vorrichtung (70) sich in der ersten Position befindet, wobei die perforierte Wand (72) eine Vielzahl von Öffnungen (722) und eine Vielzahl von Wandstreifen (724) umfasst, die keine Öffnungen aufweisen und dazu bestimmt sind, den ersten Wänden (82) des Gitters (80) gegenüberzustehen, wenn die Vorrichtung (70) sich in der ersten Position befindet, wobei mindestens eine Öffnung (722) zwischen zwei in der ersten Richtung (D$_A$) aufeinanderfolgenden Wandstreifen (724) und einem Hohlraum (84) gegenüberstehend angeordnet ist, wenn die Vorrichtung (70) sich in der ersten Position befindet.

2. Schubumkehrvorrichtung (70) mit Gitter nach Anspruch 1, wobei der Kasten (71) ferner eine poröse Grenzfläche (77) umfasst, die aus mindestens einer Schicht aus porösem Material gebildet ist und an der Grenzfläche zwischen der perforierten Wand (72) und dem Gitter (80) angeordnet ist, wenn die Schubumkehrvorrichtung (70) sich in der ersten Position befindet.

3. Schubumkehrvorrichtung (70) mit Gitter nach Anspruch 2, wobei die poröse Grenzfläche (77) eine Dicke (E) von zwischen 0,2 mm und 2 mm besitzt, wobei die Dicke (E) sich in einer dritten Richtung (DR) senkrecht zur ersten Ebene erstreckt.

4. Schubumkehrvorrichtung (70) mit Gitter nach einem der Ansprüche 2 oder 3, wobei eine Schicht aus porösem Material der porösen Grenzfläche (77) einen Stoff oder einen Schaum oder ein Material mit einer Zellenstruktur umfasst.

5. Schubumkehrvorrichtung (70) mit Gitter nach einem der Ansprüche 1 bis 4, die ferner einen dichten Rahmen (88) umfasst, der in der Aufnahme (75) zwischen der perforierten Wand (72) und dem Gitter (80) angeordnet ist, wenn die Vorrichtung (70) sich in der ersten Position auf dem Umfang der perforierten Wand (72) in der ersten Ebene befindet.

6. Schubumkehrvorrichtung (70) mit Gitter nach einem der Ansprüche 1 bis 5, wobei der Abstand, der zwei erste Trennwände (82) in der ersten Richtung (DA) trennt, und der Abstand, der zwei zweite Trennwände (83) in der zweiten Richtung (DC) trennt, jeweils in Abhängigkeit von den Frequenzen der durch die Hohlräume (84) zu behandelnden Schallwellen definiert sind.

7. Schubumkehrvorrichtung (70) mit Gitter nach einem der Ansprüche 1 bis 6, wobei die ersten Trennwände (82) des Gitters eine Höhe (H) von zwischen 10 mm und 300 mm besitzen.

8. Schubumkehrvorrichtung (70) mit Gitter nach einem der Ansprüche 1 bis 7, wobei die ersten Trennwände (82) eine Dicke (E) von zwischen 0,5 mm und 5 mm besitzen.

9. Schubumkehrvorrichtung (70) mit Gitter nach einem der Ansprüche 1 bis 8, wobei der Kasten (71) ferner eine akustisch reflektierende Wand (73) umfasst, die in einer dritten Richtung (DR) orthogonal zur ersten Ebene beweglich ist und parallel zur ersten Ebene zwischen einer Außenwand (712) und dem Gitter (80) beweglich ist, wenn die Vorrichtung (70) sich in der ersten Position befindet, wobei die Außenwand (712) dazu bestimmt ist, mit einer Gondel (2) eines Turbinentriebwerks (1) in Kontakt zu sein, wenn die Vorrichtung (70) in einem Turbinentriebwerk (1) montiert ist.

10. Schubumkehrvorrichtung (70) mit Gitter nach Anspruch 9, wobei die akustisch reflektierende Wand (73) in der dritten Richtung (DR) eine Dicke von größer als 2 mm aufweist.

**11.** Schubumkehrvorrichtung (70) mit Gitter nach einem der Ansprüche 9 oder 10, wobei der Kasten (71) elastische Mittel (78) umfasst, die zwischen der Außenwand (712) und der akustisch reflektierenden Wand (73) montiert sind und dazu ausgestaltet sind, die akustisch reflektierende Wand (73) hin zu dem Gitter (80) zurückzudrücken.

**12.** Schubumkehrvorrichtung (70) mit Gitter nach einem der Ansprüche 9 bis 11, wobei die akustisch reflektierende Wand (73) Abmessungen besitzt, die mindestens gleich den Abmessungen des Gitters (80) in der ersten Ebene sind.

**13.** Schubumkehrvorrichtung (70) mit Gitter nach einem der Ansprüche 9 bis 12, die ferner einen Aktuator (79) umfasst, der dazu ausgestaltet ist, die akustisch reflektierende Wand (73) von dem Gitter (80) zu trennen, wenn die Vorrichtung (70) sich in der zweiten Position befindet.

**14.** Schubumkehrvorrichtung (70) mit Gitter nach einem der Ansprüche 9 bis 13, wobei die akustisch reflektierende Wand (73) mindestens eine Schicht aus nachgiebigem Material umfasst.

**15.** Schubumkehrvorrichtung (70) mit Gitter nach einem der Ansprüche 10 oder 15, wobei die akustisch reflektierende Wand (73) eine Stapelung einer Vielzahl von Schichten aus mindestens zwei unterschiedlichen Materialien umfasst.

**16.** Schubumkehrvorrichtung (70) mit Gitter nach einem der Ansprüche 9 bis 15, wobei die akustisch reflektierende Wand (73) einteilig ausgeführt ist.

**17.** Schubumkehrvorrichtung (70) mit Gitter nach einem der Ansprüche 9 bis 15, wobei die akustisch reflektierende Wand (73) in mindestens zwei Teile segmentiert ist.

**18.** Vorrichtung (70) nach einem der Ansprüche 1 bis 17, wobei das Gitter (80) beweglich ist und der Kasten (71) fest ist.

**19.** Vorrichtung (70) nach einem der Ansprüche 1 bis 17, wobei das Gitter (80) fest ist und der Kasten (71) beweglich ist.

**20.** Turbinentriebwerk (1), das dazu bestimmt ist, an einem Luftfahrzeug montiert zu sein, wobei das Turbinentriebwerk (1) eine Gondel (2) mit Rotationssymmetrie umfasst, die eine axiale Richtung (DA) und eine radiale Richtung (DR) definiert, wobei die Gondel (2) eine Schubumkehrvorrichtung (70) mit Gitter nach einem der Ansprüche 1 bis 19 umfasst.

**21.** Luftfahrzeug, das mindestens ein Turbinentriebwerk (1) nach Anspruch 20 umfasst.

## Claims

**1.** A cascade type thrust reverser device (70) for a turbomachine (1) of an aircraft, the device (70) comprising a thrust reverser cascade (80) and a casing (71), the cascade (80) extending in a first plane defining a first direction ($D_A$) and a second direction ($D_C$) and including first partitions (82) positioned successively in the first direction ($D_A$) and parallel to one another, second partitions (83) intersecting said first partitions (82) and each extending in planes parallel to one another and parallel to the first direction ($D_A$), and cavities (84) each defined by two first partitions (82) and two second partitions (83), the casing (71) comprising an opening (76) extending in a plane orthogonal to said first direction ($D_A$) and a housing (75) wherein the cascade (80) can be inserted in said first direction ($D_A$) via said opening (76), and the casing (71) and said cascade (80) being in relative translation with respect to one another in the first direction ($D_A$) between a first position of the device (70) in which the cascade (80) is entirely positioned in the housing (75) and a second position of the device (70) in which said cascade (80) is at least partially outside said housing (75),
**characterized in that** the casing (71) comprises a perforated wall (72) intended to be in contact with an air flow (F) and to be positioned between said air flow (F) and the cascade (80) when the device (70) is in the first position, the perforated wall (72) including a plurality of orifices (722) and a plurality of wall strips (724) with no orifices and intended to face the first walls (82) of the cascade (80) when the device (70) is in the first position, at least one orifice (722) being positioned between two successive wall strips (724) in the first direction (DA) and facing a cavity (84) when the device (70) is in the first position.

**2.** The cascade type thrust reverser device (70) according to claim 1, wherein the casing (71) also comprises a porous interface (77) formed by at least one layer of porous material and positioned at the interface between the perforated wall (72) and the cascade (80) when the thrust reverser device (70) is in the first position.

3. The cascade type thrust reverser device (70) according to claim 2, wherein the porous interface (77) has a thickness (E) comprised between 0.2 and 2 mm, the thickness (E) extending in a third direction (DR) perpendicular to said first plane.

4. The cascade type thrust reverser device (70) according to one of claims 2 or 3, wherein a layer of porous material of the porous interface (77) comprises a web or a foam or a material with a cellular structure.

5. The cascade type thrust reverser device (70) according to one of claims 1 to 4, also comprising a sealed frame (88) positioned in the housing (75) between the perforated wall (72) and the cascade (80) when the device (70) is in the first position, on the periphery of the perforated wall (72) in the first plane.

6. The cascade type thrust reverser device (70) according to one of claims 1 to 5, wherein the distance separating two first partitions (82) in the first direction (DA) and the distance separating two second partitions (83) in the second direction (DC) each being defined as a function of the frequencies of the sound waves to be treated by said cavities (84).

7. The cascade type thrust reverser device (70) according to one of claims 1 to 6, wherein the first partitions (82) of the cascade have a height (H) comprised between 10 mm and 300 mm.

8. The cascade type thrust reverser device (70) according to one of claims 1 to 7, wherein the first partitions (82) have a thickness (E) comprised between 0.5 mm and 5 mm.

9. The cascade type thrust reverser device (70) according to one of claims 1 to 8, wherein the casing (71) also comprises an acoustically reflecting wall (73) movable in a third direction (DR) orthogonal to said first plane and positioned parallel to the first plane between an outer wall (712) and the cascade (80) when the device (70) is in the first position, the outer wall (712) being intended to be in contact with a nacelle (2) of a turbomachine (1) when the device (70) is mounted in a turbomachine (1).

10. The cascade type thrust reverser device (70) according to claim 9, wherein the acoustically reflecting wall (73) has a thickness in the third direction (DR) greater than 2 mm.

11. The cascade type thrust reverser device (70) according to one of claims 9 or 10, wherein the casing (71) comprises elastic means (78) mounted between the outer wall (712) and the acoustically reflecting wall (73) configured to push said acoustically reflecting wall (73) toward the cascade (80).

12. The cascade type thrust reverser (70) according to one of claims 9 to 11, wherein the acoustically reflecting wall (73) has dimensions at least equal to the dimensions of the cascade (80) in said first plane.

13. The cascade type thrust reverser device (70) according to one of claims 9 to 12, also comprising an actuator (79) configured to disengage the acoustically reflecting wall (73) from the cascade (80) when the device (70) is in the second position.

14. The cascade type thrust reverser device (70) according to one of claims 9 to 13, wherein the acoustically reflecting wall (73) comprises at least one layer of flexible material.

15. The cascade type thrust reverser device (70) according to one of claims 10 or 15, wherein the acoustically reflecting wall (73) comprises a stack of a plurality of layers of at least two different materials.

16. The cascade type thrust reverser device (70) according to one of claims 9 to 15, wherein the acoustically reflecting wall (73) is made in a single piece.

17. The cascade type thrust reverser device (70) according to one of claims 9 to 15, wherein the acoustically reflecting wall (73) is segmented into at least two pieces.

18. The device (70) according to one of claims 1 to 17, wherein the cascade (80) is movable and the casing (71) is fixed.

19. The device (70) according to one of claims 1 to 17, wherein the cascade (80) is fixed and the casing (71) is movable.

20. A turbomachine (1) intended to be mounted on an aircraft, the turbomachine (1) comprising an axially symmetrical nacelle (2) defining an axial direction (DA) and a radial direction (DR), the nacelle (2) including a cascade type thrust reverser device (70) according to one of claims 1 to 19.

21. An aircraft comprising at least one turbomachine (1) according to claim 20.

[Fig. 1A-1B]

**FIG.1A**

1  21  2  8  7  22  
$D_R$  $D_A$  $D_C$  
F  6  4  3  5  X

ART ANTERIEUR

**FIG.1B**

1  21  2  8  7  22  
$D_R$  $D_A$  $D_C$  
F  6  4  3  5  X

ART ANTERIEUR

[Fig. 2A-2B]

**FIG.2A**

1  21  2  8  7  22  
$D_R$  $D_A$  $D_C$  
F  6  4  3  5  X

ART ANTERIEUR

**FIG.2B**

1  21  2  8  7  22  
$D_R$  $D_A$  $D_C$  
F  6  4  3  5  X

ART ANTERIEUR

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3039517 A1